# EUROPEAN PATENT SPECIFICATION

(11) **EP 2 946 872 B1**
(45) Date of publication and mention of the grant of the patent: **28.12.2016**
(21) Application number: 13720978.9
(22) Date of filing: 21.01.2013
(51) Int. Cl.: B23Q 1/76, B23C 3/06, B23B 5/18

(54) **MACHINE AND METHOD FOR MACHINING LARGE SHAFTS COMPRISING ECCENTRIC PARTS**
MASCHINE UND VERFAHREN ZUM BEARBEITEN VON GROSSEN EXZENTRISCHEN WERKSTÜCKEN
MACHINE ET PROCÉDÉ POUR L'USINAGE D'AXES DE GRANDE TAILLE À PIÈCES EXCENTRIQUES

(43) Date of publication of application: 25.11.2015
(73) Proprietor: Bostek Innovation S.L.U., 20159 Asteasu (Gipuzkoa) (ES)
(72) Inventor: AGUIRREZABALA, Joseba, E-20159 Asteasu (ES); MANGAS, Antonio, E-20159 Asteasu (ES)
(74) Representative: Balder IP Law, S.L.
(86) International application number: PCT/ES2013/070021
(87) International publication number: WO 2014/111604

(56) References cited:
- EP-A2- 1 302 275
- GB-A- 733 315
- GB-A- 2 249 514
- US-A- 3 731 566
- US-A1- 2002 020 258

## Description

### TECHNICAL FIELD

The invention is encompassed within the field of the manufacturing of shafts with eccentric portions such as crankshafts and camshafts, and especially large-sized monolithic and crankshafts reinforced with hoops, and is especially useful in the machining of large shafts with eccentric portions which, when resting on their ends on corresponding journals, are deformed due to their own weight, and in particular for large shafts with eccentric portions wherein the deformation in their central portion exceeds 0.01 mm.

### BACKGROUND OF THE INVENTION

The machining of large-sized shafts with eccentric portions poses the problem that, when they are resting on their ends on the corresponding journals, said shafts suffer deformations caused by their own weight. For example, when the deformation exceeds 0.01 mm in the central portion of the shaft, it is considered to be a large-sized shaft.

Large shafts with eccentric portions, such as large-sized monolithic and reinforced crankshafts, for example, of 4 metres long or more (for example, 10 or 12 metres), of the type that is used in, for example, ship propulsion machines, can be obtained by forging followed by machining. Reinforced crankshafts of this type can be obtained by forging followed by machining and reinforcement with hoops, in some cases completing the process with a final machining. When the crankshaft or portions of the reinforced shaft come out of the forge they tend to have much more material than that presented by the final product and this excess material is eliminated by machining. The amount of material that is eliminated can be, depending on the process and the machines available, over 50% of the material of the object coming out of the forge. In other words, substantial machining of the object that comes out of the forge is carried out. During this machining, the crankshafts tend to have their end journals resting on supports, at least one of which may have means for turning the crankshaft on its longitudinal axis.

One problem presented by the machining of large shafts with eccentric portions and, particularly, large-sized crankshafts is that they are very heavy. Thus, for example, a 10-metre long crankshaft can typically weigh between 22 and 24 tonnes. This causes the crankshafts to become deformed by their own weight when they are resting on their end journals. For this reason, during the machining the crankshafts usually rest upon steady rests or fixed supports arranged in intermediate positions.

EP-2281649-A1 describes an example of a machine and method for machining large crankshafts, with two end supports and one intermediate support, in this case a support with a hole through which the crankshaft passes. In other cases, the central support can be configured in a C-shape with a plurality of pushing fingers (typically 4), hydraulically actuated and which are provided with wheels on their ends which contact the intermediate journal of a head. Frequently, more than one intermediate support is used.

Although the intermediate supports can be convenient and even necessary to prevent the crankshaft from bending or flexing in a vertical direction due to its own weight, they also pose a problem: given that these intermediate supports or steady rests force the position of the crankshaft, in other words, maintain the crankshaft secured by means of its journals in a fixed position defined by the pushing fingers or other securing elements, therefore it is possible that when the intermediate supports release the crankshaft, the latter recovers its natural position. In other words, if the longitudinal axis of rotation of the crankshaft is offset in one or more journals of the shaft, when the intermediate steady rests or supports release the crankshaft, the crankshaft returns to its offset position. The term "offset" implies that the centres of the crankshaft journals do not coincide, in other words, that the longitudinal axis of the crankshaft does not pass through the centre of all the crankshaft journals. When this occurs, the crankshaft has to be straightened. One straightening technique permissible using a non-prohibited method (forging, pressing, beating, etc.) comprises machining it, in such a way that the centres of the journals are aligned in the longitudinal direction of the crankshaft.

The use of an inspection table is known to check whether the axes of the crankshaft journals are off-centre. In order to carry out the inspection, the crankshaft is taken out of the machining equipment and is carried to the inspection table. This table comprises a very smooth surface on which the crankshaft is placed with its end journals resting on respective fixed supports. The remaining journals of the crankshaft are resting on movable supports or steady rests that support the weight of the crankshaft (in such a way that it does not become deformed or bend in a vertical direction) but which can move in a lateral direction or transversally to the longitudinal axis of the crankshaft, in other words, in a perpendicular manner to the axis of the crankshaft. Subsequently, the crankshaft is turned manually or automatically in such a way that the deviations of the centres of the journals cause a transversal displacement of the corresponding movable steady rests. In each movable steady rest, the transversal displacement is measured using a detector (sometimes called a "dial gauge") and the off-centring of each journal is thereby determined.

One drawback of this method is that the crankshaft has to be taken out of the machine, placed on the inspection table, and then placed back into the machine to continue with the machining process so that the off-centring is eliminated. Another drawback is that, it may occur that the off-centring is such that it is no longer possible to machine the crankshaft to centre the journal in question. In order to correct the off-centring, there must be sufficient material left so that, when eliminated by means of machining, the new centre of the journal is aligned with the rest of the centres, at the same time the journal must present suitable dimensions for the use that the crankshaft is to be given. If it is not possible to correct the off-centring, the losses can be immense, taking into account the cost of this type of crankshaft, in terms of material and labour.

### DESCRIPTION OF THE INVENTION

A first aspect of the invention relates to a machine for the machining of large shafts with eccentric portions. In this context, the term "shaft with eccentric portions" identifies elements such as monolithic crankshafts, reinforced crankshafts, camshafts, while the term "large" means that its dimensions and, particularly, its length implies that they deform due to their own weight when they are resting on their end journals, and especially, when the deformation at any point between these end journals exceeds 0.001 mm, which implies that the crankshafts have a considerable length, such as four metres or more, for example, more than eight, ten or twelve metres; in many embodiments of the invention the large shafts with eccentric portions, such as crankshafts, can weight several tonnes, for example, more than five, ten or twenty tonnes.

The machine according to the invention is especially useful for the machining of crankshafts, although it can also be used to machine other large shafts with eccentric portions, such as, for example, camshafts.

The machine comprises a first support and a second support, said first support being configured to support or uphold a first journal of the large shaft with eccentric portions, and said second support being configured to support or uphold a second journal of the large shaft with eccentric portions. In many embodiments of the invention, the first journal and the second journal are the end journals of the large shaft with eccentric portions, and one of these supports or both of them may have means to make the large shaft with eccentric portions rotate.

Also, the machine comprises at least one third support, in other words, one third support or several third supports. In other words, reference to a first, second and third support does not exclude the possibility of there being other supports, for example, a plurality of third supports that present the characteristics of said third support that will be mentioned next; i.e., the term "third" does not mean that there are only three supports, but rather, simply means that there are one or more supports in addition to the first support and the second support. The third support is configured to support a third journal of the large shaft with eccentric portions, in other words, a journal that is not said first journal or said second journal. There may be several third supports associated to respective third journals; in many embodiments of the invention, the third journal or the third journals are intermediate journals of the large shaft with eccentric portions, situated between the end journals of the large shaft with eccentric portions.

The third support has a supporting element configured so that said third journal rests on said supporting element when the large shaft with eccentric portions is placed in the machine.

According to the invention, said supporting element is configured in a laterally-displaceable manner, in order to move laterally with the third journal when the third journal moves laterally, in other words, transversally with respect to the longitudinal axis of the large shaft with eccentric portions, preferably on the horizontal plane, during the rotation of the large shaft with eccentric portions around its longitudinal axis, something that occurs if the large shaft with eccentric portions is offset, in other words, if the third journal is off-centre with respect to the longitudinal axis of the large shaft with eccentric portions, for example, the one that passes through the first journal and the second journal. In this way, the displacement of the supporting element is indicative of the off-centring degree of the third journal of the large shaft with eccentric portions with respect to the longitudinal axis that passes through the first journal and through the second journal of the large shaft with eccentric portions.

The term "longitudinal axis" of the large shaft with eccentric portions defines the line that joins the two centres of the journals of the first support and the second support.

In this way, the third support does not "force" the position of the third journal of the large shaft with eccentric portions, rather it allows it to move in a lateral direction during the rotation of the large shaft with eccentric portions around the longitudinal axis that passes through the first support and the second support. This means that the machining of the journal (or of the adjacent journals, which are similarly offset or off-centred) can be carried out taking into account the real configuration of the large shaft with eccentric portions, in other words, taking into account the offset when eliminating the material. Consequently, with the machining tool in the appropriate position, more material can be eliminated in certain zones of the circumference of the journal and less in others, until achieving a cylindrical journal properly aligned with the longitudinal axis of the large shaft with eccentric portions, namely, the axis that passes through the first journal and through the second journal, in a centred manner with respect to said journals.

In this way, and unlike what occurs in the state of the art mentioned above (wherein the position of the intermediate journals are forced, carrying out uniform machining of all the journals but producing an off-centring due to an offset once the journals are released), with the present invention it is easy to produce circular journals with their centres aligned, in such a way that the machining can be different on the different journals, in other words, more material can be eliminated from some zones than from others, modifying the centre of the journals until they are all aligned.

One way of achieving this can be by machining the third journal itself while it is resting on the third support; if it is done this way, it is known that the third journal is properly centred when the supporting element stops moving laterally during the rotation of the large shaft with eccentric portions around its axis. However, it may be more practical to machine one journal or the journals adjacent to the third journal. For example, it is possible to alternate between journals supported on third supports and unsupported journals, and to machine the unsupported journals, to then change the position of the third supports to support the journals that have been machined, to then proceed to machine the remaining journals.

Whichever option is chosen, due to the freedom of lateral movement of the journals supported on the third supports during the rotation and machining of the large shaft with eccentric portions, the machining produces what could be called an automatic centring or straightening of the large shaft with eccentric portions, with respect to the real longitudinal axis of the large shaft with eccentric portions.

Logically, the machine can also comprise manual and automatic machining and measurement tools, as is conventional per se.

In some embodiments of the invention, the supporting element has an upper part that presents at least two bearings or pairs of bearings configured to support the third journal of the large shaft with eccentric portions from below; said two bearings or pairs of bearings may be situated one on each side of a vertical plane that passes through the longitudinal axis of the third journal of the large shaft with eccentric portions. These bearings facilitate the rotation of the large shaft with eccentric portions with respect to the supporting element.

In some embodiments of the invention, said upper part of the supporting element may present a plurality of housings configured to receive said bearings, for example, two, four or more housings. Said housings may be arranged to allow the placement of bearings at different distances from each other, in such a way that the supporting element can be adapted to different diameters of the third journal of the large shaft with eccentric portions. For example, there may be four housings in each supporting element, and two bearings or pairs of bearings, in such a way that the selection of the housings in which the bearings or pairs of bearings are placed can be made according to the diameter of the journal of the large shaft with eccentric portions that the supporting element must support.

In some embodiments of the invention, the supporting element may be arranged on bearing means, for example, balls, beads, wheels or bearings, arranged in the third support. In this way, the supporting element can slide easily with respect of the general structure of the third support. This configuration allows the invention to be implemented in a simple manner in already existing machines, for example, by placing the supporting element or the supporting elements on the C-shaped steady rest or steady rests that already exist on the market, that is, on the wheels of the pushing fingers that have been described above. In other words, the supporting element can be configured as a simple runner that is placed on the lower pushing fingers of said steady rests.

According to a particular embodiment of the invention, the supporting element comprises a main transversal linear guide assembled on an upper base of a vertical hydraulic finger, a movable transversal support with at least one main lower transversal runner and displaceable on the linear guide; at least two transversally opposed bearing-holder bodies displaceable on at least one upper secondary linear guide arranged in the movable support, in addition to means of lateral displacement in order to displace the bearing-holder bodies on the secondary linear guide between a plurality of opposing positions and locking means to maintain the bearing-holder bodies locked in positions wherein the bearings support the third journal of the large shaft with eccentric portions.

In one embodiment, the supporting element comprises two main runners arranged in both lateral portions of the movable support. The machine may similarly comprise a pair of secondary linear guides (306) parallel to each other.

The means of lateral displacement may comprise a transversal spindle connecting the bearing holder bodies. The transversal spindle that screws into the respective thread holes, which are comprised in the bearing holder bodies, in such a way that the rotation of the spindle in one direction and the other causes the bearing holder bodies to come closer together or move further apart from each other.

The locking means may comprise at least one pair of stop screws that screw into through holes of the opposing side wings emerging upwards from the movable support in coaxial alignment with the spindle.

In some embodiments of the invention, the machine may comprise a plurality of said third supports, with the corresponding supporting elements. In this way, the large shaft with eccentric portions can be maintained resting on several of its journals, for example, on several of its intermediate journals, interspersing resting journals with non-resting journals. It is possible, for example, to machine first, the non-resting journals and then to change the position of the third supports so that the machined journals rest, and then to machine the remaining journals.

In some embodiments of the invention, the machine comprises a displacement detector associated to the supporting element. In this way, by using a displacement detector, it is possible to measure the displacement of the supporting element when rotating the large shaft with eccentric portions, and thereby determine whether the journal supported by the supporting element is properly centred or not.

In some embodiments of the invention, said first support and second support are supports for the end journals of the large shaft with eccentric portions, and the third support is a support for an intermediate journal of the large shaft with eccentric portions.

Another aspect of the invention relates to a method for machining large shafts with eccentric portions (the term "large" having the meaning defined above), which comprises the steps of:
placing the large shaft with eccentric portions to be machined with a first journal (for example, an end journal) supported on a first support and with a second journal (for example, another end journal) supported on a second support;
rotating the large shaft with eccentric portions around a longitudinal axis of the large shaft with eccentric portions and machining a plurality of journals of the large shaft with eccentric portions and, optionally, also other parts of the large shaft with eccentric portions such as, for example, the counterweights of a crankshaft.

According to the invention, the method additionally comprises supporting at least one third journal of the large shaft with eccentric portions (for example, one or several intermediate journals of the crankshaft) on a corresponding supporting element displaceable in a lateral direction, in such a way that said supporting element moves laterally or transversally, according to a movement of the corresponding third journal on the horizontal plane during the rotation of the large shaft with eccentric portions during the machining process. In this way, blockages of the large shaft with eccentric portions on the horizontal plane are prevented, meaning that the machining of the journals can be carried out with respect to the real longitudinal axis of the large shaft with eccentric portions and not with respect to a "false" axis of the journal due to a blockage, as often occurs in the state of the art. It is possible to machine the journals that are supported on the supporting elements, and/or it is possible to machine journals other than those that are supported on the supporting elements, for example, journals adjacent to the ones that are supported on one or more supporting elements. There can be one or more third journals, and the position of the supporting elements can be changed to successively support different journals of the large shaft with eccentric portions, for example, different intermediate journals of the crankshaft.

In some embodiments of the invention, the method additionally comprises the step of measuring the displacement of the supporting element.

In some embodiments of the invention, the method comprises the step of machining a journal when it is supported on said supporting element. This option can be advantageous because it allows controlling the centring of the journal during machining, on the basis of measuring the displacement of the supporting element.

In some embodiments of the invention, the method comprises the step of machining a journal that is not supported on said supporting element. The machining can be done taking into account the axis that passes through the end journals of the large shaft with eccentric portions; given that the intermediate journals are not blocked, the machining manages to centre each journal with respect to the real longitudinal axis of the large shaft with eccentric portions, and not with respect to the fictitious axis of certain journals blocked on the horizontal plane in such a way that an offset is prevented from occurring when the journals are released.

In some embodiments of the invention, the method comprises the step of measuring a displacement of said supporting element in order to determine whether a journal is correctly centred with respect to the longitudinal axis of the large shaft with eccentric portions that is defined by the two centres of the first journal and of the second journal of the first and second support respectively. For example, it is possible to measure the displacement of a plurality of supporting elements in order to determine whether a corresponding plurality of journals of the large shaft with eccentric portions are centred with respect to the longitudinal axis of the large shaft with eccentric portions.

In some embodiments of the invention, the supporting element comprises at least two bearings to support the corresponding journal of the large shaft with eccentric portions, and/or the supporting element is placed on rotating elements associated to a support - for example, an intermediate support - of a machine for machining the large shaft with eccentric portions, in order to facilitate the sliding of the supporting element in the lateral direction, following the displacement in lateral direction of the journal of the large shaft with eccentric portions during the rotation of the large shaft with eccentric portions.

### BRIEF DESCRIPTION OF THE DRAWINGS

To complement the description and with a view to contributing towards a better understanding of the characteristics of the invention, according to an example of a practical embodiment thereof, a set of drawings is attached as an integral part of the description, which by way of non-limitative example, represent the following:
Figure 1 is a view in perspective of a machine according to a possible embodiment of the invention.
Figure 2 is a view in perspective of a third support according to a possible embodiment of the invention.
Figure 3 is a partial schematic elevational view of said third support, with a displacement detector assembled.
Figures 4A-4C are schematic views in perspective, in transversal and longitudinal sections, respectively, of a supporting element of said third support.
Figure 5 is a schematic view in perspective from below, of a detail of the third support in this alternative embodiment of the invention.
Figure 6 is a front elevational view of another embodiment of the supporting element and its arrangement in the machine.
Figure 7 is a more detailed front elevational view of the supporting element and hydraulic finger shown in figure 6.
Figure 8 is a side elevational view corresponding to figure 8.
Figure 9 is a partial front elevational view of the supporting element and hydraulic finger shown in figure 6.
Figure 10 is a side elevational view corresponding to figure 9.

### DESCRIPTION OF AN EMBODIMENT OF THE INVENTION

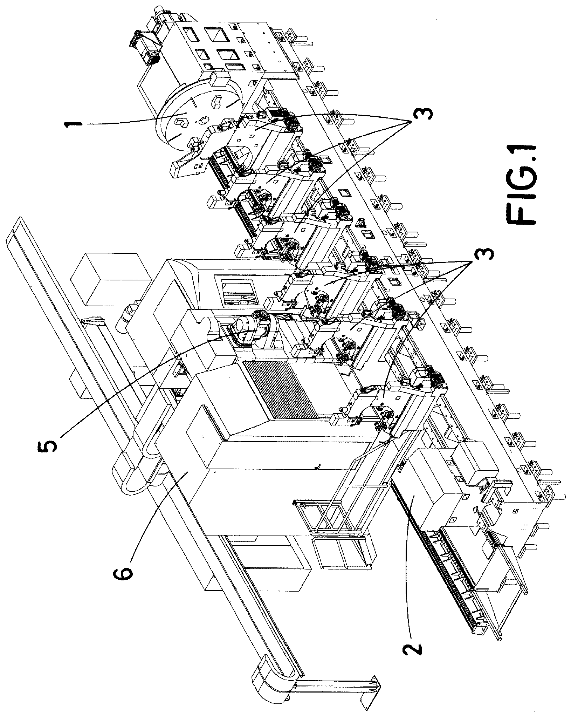

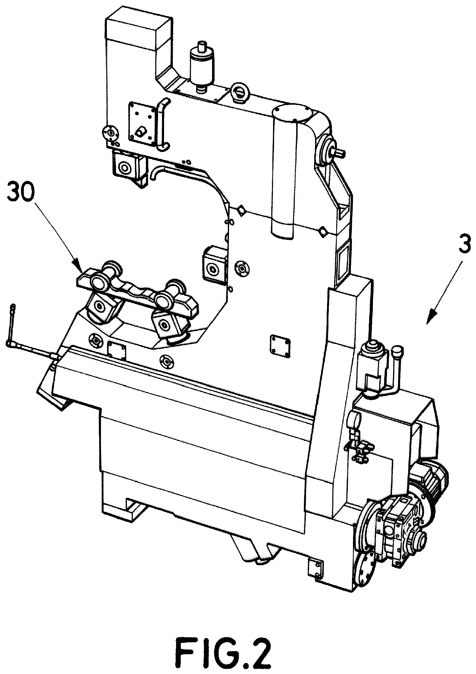

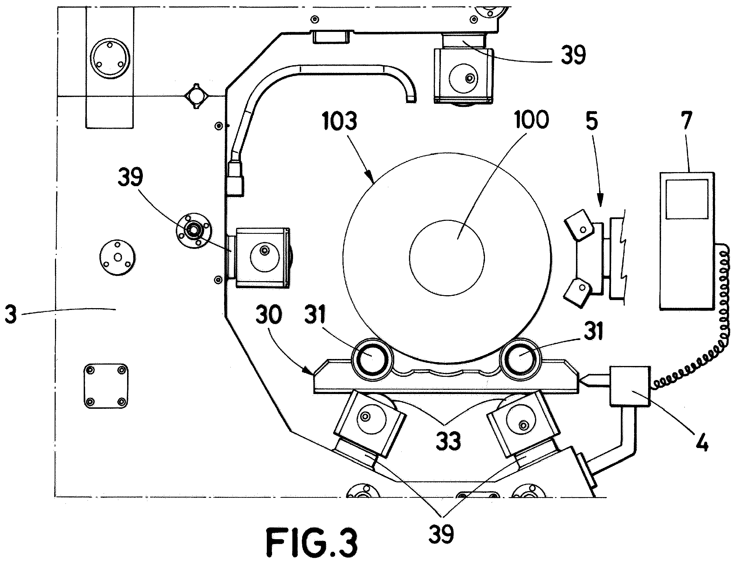

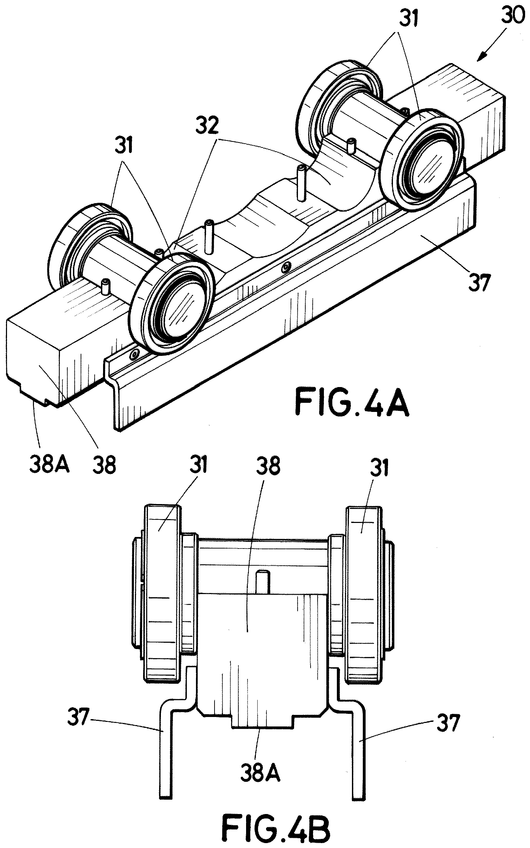

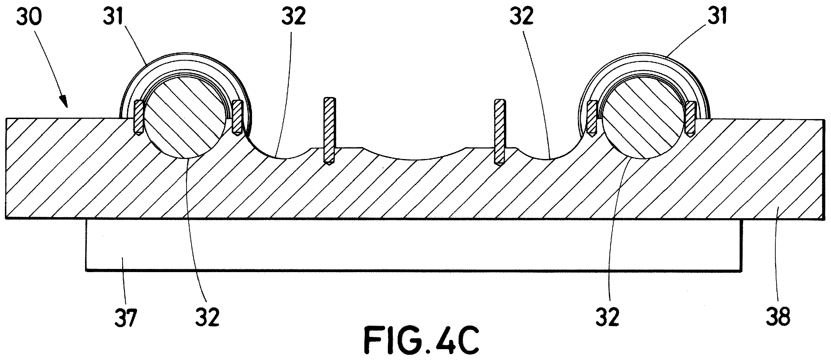

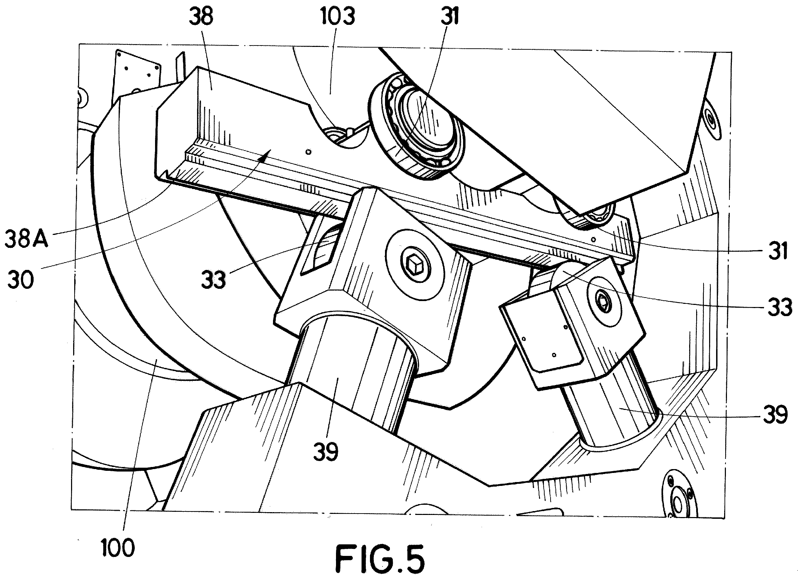

Figure 1 illustrates a machine for machining large shafts with eccentric portions according to an embodiment of the invention intended for the machining of a crankshaft; a first end journal of the crankshaft will be assembled on a head or first support 1, and a second end journal of the crankshaft will be assembled on a second support 2, also called a tailstock. On the other hand, there are several third supports 3 that will support or uphold respective intermediate journals of the crankshaft. On the other hand, a head 5 of a machining tool, displaceable in a vertical and horizontal direction as is conventional in this type of machines can be observed. The cabin 6 of milling tools can also be observed. Figures 2 and 3 reflect the constitution of the third supports 3 that incorporate a first embodiment of the hydraulic fingers 39. These supports 3 have an overall C-shape (with the top part rotating to be able to attach the part on the journals 1 and 2), with a plurality of hydraulic fingers 39 which at their ends are provided with wheels 33. Supported on the wheels 33 of the two lower fingers there is a supporting element 30 in the form of a runner, which can slide laterally on said wheels 33 -with respect to the longitudinal axis of the crankshaft to be machined. On the other hand, the supporting element comprises two bearings or pairs of bearings 31, on which the corresponding intermediate journal 103 of the crankshaft is supported. A displacement detector 4, which in some cases can be the sensor of the machine, is in contact with the supporting element in order to measure the lateral displacement of said supporting element and to provide the corresponding information to a control sub-system 7 of the machine. Figure 3 also illustrates, in a schematic manner, a machining head 5, which can act on the journal 103 that is resting, or on a journal adjacent to the one that is resting. Figures 4A-4C reflect the configuration of the supporting element 30 according to a possible embodiment of the invention. The supporting element 30 comprises a body 38 having a substantially rectangular or square section, and which on its lower face presents a guide rail 38A which is supported on the wheels 33 of the hydraulic fingers 39, as shown in figure 5. The two plates or profiles 37 have been screwed on to the sides of the body 38, which serve to better retain the supporting element on the wheels 33; in figure 5 these profiles 37 have been removed. On its upper face the body 38 presents four housings 32, configured to receive the corresponding bearings or pairs of bearings 31. The purpose of this plurality of housings is to allow the bearings to be placed at an adequate distance from each other, according to the diameter of the journal 103 of the crankshaft that the supporting element 30 must support. In figures 4A and 4C the bearings 31 are situated in the housings 32 that allow a maximum separation between bearings.

In figure 5 it can be observed how an intermediate journal 103 of a crankshaft 100 is supported on the bearings 31 of the supporting element 30. When the crankshaft 100 rotates around its longitudinal axis, if the journal 103 is off-centre with respect to said longitudinal axis, a movement of said journal 103 occurs on the horizontal plane, a translation which carries with it the supporting element 30, which slides laterally with ease, given that it is supported on the wheels 33 of the hydraulic fingers 39. In this way, the intermediate journal 103 is not blocked in its position, and a possible offset thereof is reflected in its lateral movement.

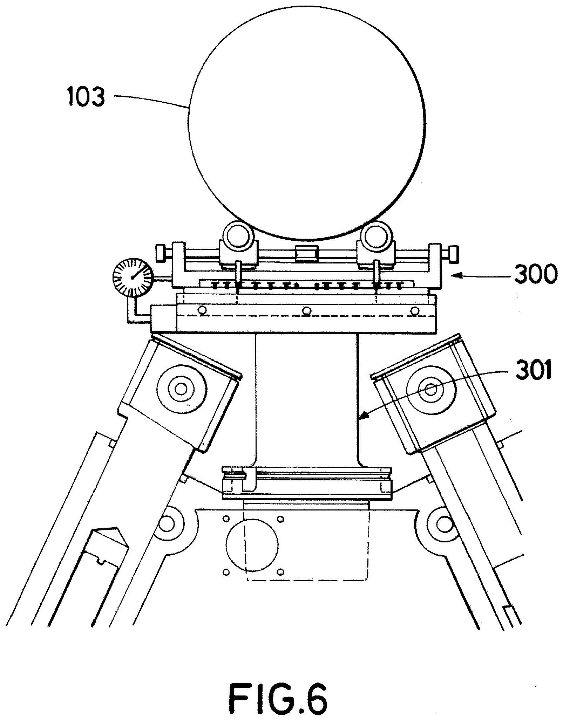

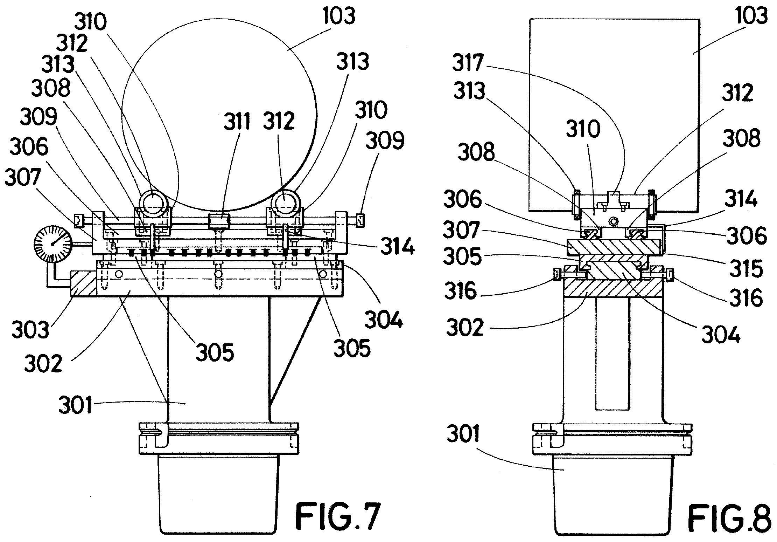

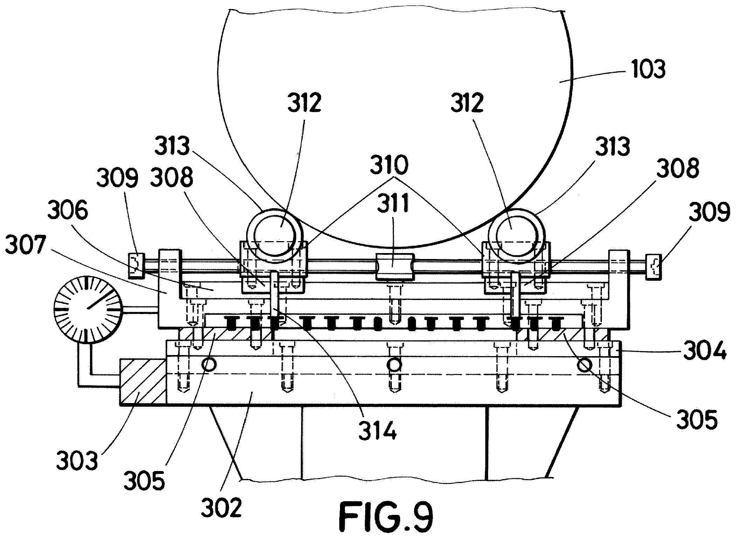

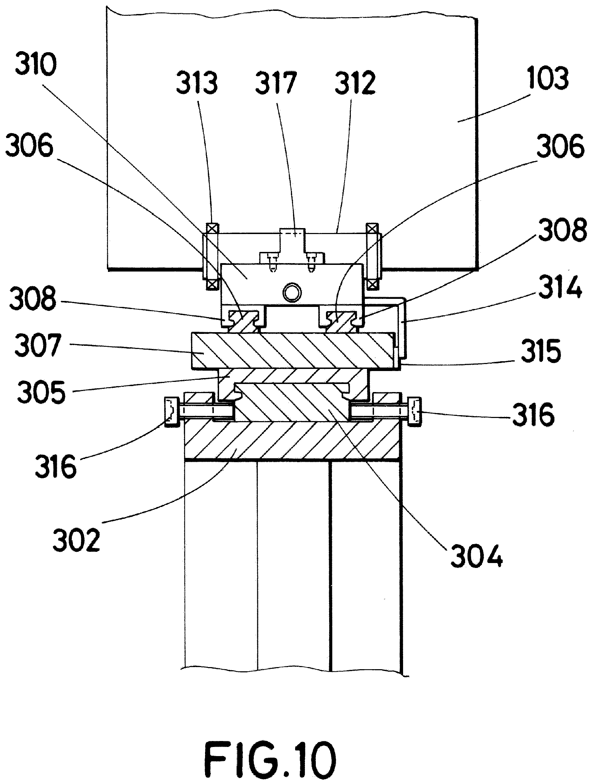

Figures 6 to 10 show a supporting element 300 assembled on a central hydraulic finger, vertically and perpendicularly displaceable with respect to the longitudinal axis of the part to be machined. Unlike the lateral hydraulic fingers 39 that appear in the preceding figures, the central hydraulic finger does not have rollers on its end like the lateral hydraulic fingers 39, but rather it is provided with a standard nodular fastening in order to place a straightening tool when necessary and to remove said tool during the machining of the parts and to cover it with a cover. It also comprises an attachment which may be, for example, a conventional HSK 160 type attachment.

This central hydraulic finger comprises a "very sensitive" actuation (manual or automatic), in other words the passage of the spindle has to be very small so that its height can be adjusted as best as possible (namely hundredths of a mm) and very precisely. It must be taken into account that the central hydraulic finger has to be capable of withstanding the same weight as the lateral hydraulic fingers 39 together, for this reason it must be more rigid and stronger so as not to become deformed by the stress to which it is subjected. Also, it comprises a brake or lock, such as for example a mechanical, hydraulic or similar brake or lock (not shown in the figures).

In the case of figures 6 to 10, the central hydraulic finger comprises a main body 301 which, in the case of figures 6 to 10, is an HSK-160 blank, although it could also be another standard attachment, such as Iso, Capto, KM, etc. The length of the support must be as short as possible, since it has to provide the variable vertical displacement according to the part.

The main body 301 comprises an upper base 302 on which the main linear guide 304 of the tool is assembled. The upper base 302 has through holes for attaching the main linear guide 304 by means of bolts. On its two sides the upper base 302 of the main body has holes for the passage of alignment screws 316 which are used to carry out the alignment of the main linear guide 304. These alignment screws 316 make it possible to position the main linear guide 304 in parallel to the axis of the machine. This option can be replaced by another system having the same purpose. It is important that the main guide 304 is correctly parallel to the X axis of the machine since it is on this axis where the displacement (deflection) of the part upon being rotated on the longitudinal axis is measured. If the main linear guides of all the supporting elements 3 are misaligned, this implies an overstrain for the lateral displacement of the part and the result of the measurement of the deflection is not real, rather it will always be less than the real deflection.

Between the main linear guide 304 and the upper base 302 of the main body 301 a pair of main runners 305 is assembled. The main linear guide 304 and the main runners 305 make it possible for the crankshaft 100 to move laterally. The two main runners 305 are adjusted to the main guide 304. In the embodiment shown in figures 6 to 10 it is provided with a pair of main runners in order to be able to assemble smaller runners (due to the dimension limitations) and one runner for each pair of bearings in order to avoid possible deformations in the movable support 307 which is arranged on the main guide 304 although it is possible to assemble just one main runner 305 having larger dimensions.

On the upper face of the movable support 307 there is a pair of secondary linear guides 306 assembled, which are smaller than the main linear guide 304, and on which two pairs of secondary runners 308 are adjusted, emerging from the upper face of the movable support 307. Both bearing holder bodies 310, whose lateral positions can be externally delimited by means of stop screws 309, which screw into respective through-holes made in respective upper lateral wings of the movable support 307, move on the pairs of secondary runners 308. The bearing holder bodies are connected to each other by means of a transversal spindle 311. In each bearing holder body 310 a common shaft 312 is assembled, of a pair of bearings 313 which support the journal 103 of the crankshaft 100. The shaft 312 is secured to the bearing holder body 310 by means of a conventional lock 317.

The bearing holder bodies comprise respective through holes for the spindle 311, one of the bearing holder bodies having a clockwise thread and the other a counter-clockwise thread. The spindle 311 allows the two bearing bodies to displace in a homogenous manner, between transversal positions. In the centre of the spindle 311 a nut is provided that allows the spindle 311 to rotate. One side of the spindle 311 has a clockwise thread and the other side a counter-clockwise thread, so that the bearing holder bodies 310 move equally to and from the centre of the tool. In this way, secondary runners 308 of the bearing holder bodies 310 and, therefore, the bearings 313, move on the secondary linear guides 306, in such a way that it is possible to displace the pairs of bearings 313 between different positions to adapt them to the diameter of the journal 103 of the crankshaft 100 that they must contact. Once the desired position of the bearing holder bodies 310 is reached by means of action of the spindle 311, the bearing holder bodies 310 are locked into said position by means of tightening the stop screws 309. It is possible to contemplate four stop screws 309, two on either side, of which one is on the right and the other on the left of the spindle 311.

In order to measure the lateral displacement of the part to be machined, a lateral displacement gauge 303 is provided that measures the differences of the lateral positions of the movable support 307 with respect to the upper base 302 of the main body 301 and, in this way, detects the lateral displacement of the part to be machined when it turns on its longitudinal axis. It may be a standard dial indicator or a gauge that transfers the information directly to a CNC, a sensor, etc.

A position indicator 314 is also provided that determines the position of the bearing holder body 310 on the secondary linear guides 308 and, therefore, the position of the bearings 313 adjusted to the diameter of the journal 103 of the crankshaft 100 of the part to be machined 100, and indicate that diameter on a Vernier scale that indicates the diameter of the journal in mm. By means of the indicator 314 the journal diameters for which the bearings 313 are positioned will be indicated.

It is important to ensure that no element is deformed by the stress applied upon it as a result of the weight of the crankshaft 100.

It may be preferable to machine the journals that are not supported; for example, it may be preferable to support a plurality of intermediate journals 103 on the corresponding third supports 3, and to machine unsupported journals, centring them with respect to the longitudinal axis of the crankshaft. Then, the position of the third supports 3 is changed to support the intermediate journals 103 that have already been machined, and the remaining intermediate journals 103 are machined.

Once the machining of the crankshaft has ended, the verification of the centring of the journals 103 can be made on the machine itself, by supporting the intermediate journals 103 on the supporting elements 30, 300 as described, and measuring the lateral displacement of the supporting elements 30, 300 during a rotation of the crankshaft around its longitudinal axis.

In this text, the word "comprises" and its variants (such as "comprising", etc.) must not be interpreted in an exclusive manner, i.e., they do not exclude the possibility that what has been described can include other elements, steps, etc.

On the other hand, the invention is not limited to the specific embodiments which have been described but rather also includes, for example, the variants which can be carried out by the person having ordinary skill in the art (for example, with regard to the choice of materials, dimensions, components, configuration etc.) and design, within the scope of what is inferred from the claims.

## Claims

1. Machine for machining large shafts with eccentric portions, said large shafts being shafts having a length of at least four meters and/or a weight of more than five tonnes, said machine comprising a first support (1) and a second support (2), said first support (1) being configured to support a first journal of the large shaft with eccentric portions, and said second support (2) being configured to support a second journal of the large shaft with eccentric portions, the machine additionally comprising at least one third support (3) configured to support a third journal (103) of the large shaft with eccentric portions, said third support (3) comprising a supporting element (30, 300) configured so that said third journal (103) is left resting on said supporting element (30) when the large shaft with eccentric portions is placed in the machine,
**characterised in that**
said supporting element (30, 300) is configured in a laterally displaceable manner, so that it moves laterally, transversally with respect to a longitudinal axis of the large shaft with eccentric portions, with the third journal (103) when the third journal (103) moves laterally during the rotation of the large shaft with eccentric portions around its longitudinal axis.

2. Machine according to claim 1, wherein the supporting element (30, 300) has an upper part that presents at least two bearings (31, 313) configured to support the third journal (103) of the large shaft with eccentric portions (100) from below.

3. Machine according to claim 2, wherein said upper part presents a plurality of housings (32) configured to receive said bearings.

4. Machine according to claim 3, wherein said housings (32) are arranged so as to allow the placement of bearings (31) at different distances from each other, in such a way that the supporting element can be adapted to different diameters of the third journal.

5. Machine according to any of the preceding claims, wherein the supporting element (30) is arranged on bearing means (33) arranged in the third support (3).

6. Machine according to claim 2, **characterised in that** the supporting element (300) comprises
a main transversal linear guide (304) assembled on an upper base (302) of a vertical hydraulic finger;
a transversal movable support (307) with at least one main lower transversal runner (305) displaceable on the main linear guide (304);
at least two bearing holder bodies (310) transversally opposite each other and displaceable on at least one upper secondary linear guide (306) arranged in the moveable support (307);
lateral displacement means (311) to displace the bearing holder bodies (310) on the secondary linear guide (306) between a plurality of positions opposite each other;
locking means (309) to maintain the bearing holder bodies (310) locked in positions wherein the bearings (313) support the third journal (103) of the large shaft with eccentric portions (100).

7. Machine according to claim 6, **characterised in that** it comprises two main runners (305) arranged in respective lateral portions of the moveable support (307).

8. Machine according to claim 6 or 7, **characterised in that** it comprises a pair of secondary linear guides (306) parallel to each other.

9. Machine according to claim 6, 7 or 8, **characterised in that** the bearing holder bodies (310) are connected to each other by means of a transversal spindle (311) that screws into respective threaded holes comprised in the bearing holder bodies (310), in such a way that the rotation of the spindle (311) in one direction and the other causes the bearing holder bodies (310) to come closer together or move further apart from each other.

10. Machine according to claim 9, **characterised in that** it comprises at least one pair of stop screws (309), which screw into through holes of the lateral wings opposite to each other that emerge upwards from the movable support (307) in coaxial alignment with the spindle (311).

11. Machine according to any of the preceding claims, comprising a plurality of said third supports (3), with the corresponding supporting elements (30, 300).

12. Machine according to any of the preceding claims, comprising a displacement detector (4, 303) associated to the supporting element (30, 300).

13. Machine according to any of the preceding claims, wherein said first support (1) and second support (2) are supports for the end journals of the large shaft with eccentric portions, and wherein the third support (3) is a support for an intermediate journal (103) of the large shaft with eccentric portions.

14. Method for the machining of large shafts with eccentric portions, comprising the steps of:
placing the large shaft with eccentric portions to be machined with a first journal supported on a first support (1) and with a second journal supported on a second support (2);
rotating the large shaft with eccentric portions and machining a plurality of journals of the large shaft with eccentric portions;
**characterised in that** it additionally comprises the step of
leaving at least one third journal (103) of the large shaft with eccentric portions resting on a supporting element (30, 300) displaceable in a lateral direction, so that said supporting element (30, 300) moves laterally, transversally with respect to a longitudinal axis of the large shaft with eccentric portions, following a movement of the corresponding third journal (103) on the horizontal plane during the rotation of the large shaft with eccentric portions (100) during the machining process.

15. Method according to claim 14, which additionally comprises the step of measuring the displacement of the supporting element (30, 300).

16. Method according to claim 14 or 15 comprising the step of machining a journal (103) when it is resting on said supporting element (30, 300).

17. Method according to any of claims 14 to 16, comprising the step of machining a journal that is not resting on said supporting element (30, 300).

18. Method according to any of claims 14 to 17, comprising the step of measuring a displacement of said supporting element (30, 300) in order to determine whether a journal is correctly centred with respect to the longitudinal axis of the large shaft with eccentric portions.

19. Method according to claim 18, wherein the displacement of a plurality of supporting elements (30, 300) is measured in order to determine whether a corresponding plurality of journals (103) are centred with respect to the longitudinal axis of the large shaft with eccentric portions.

20. Method according to any one of claims 14-19, wherein the supporting element (30, 300) comprises at least two bearings (31, 313) to support the corresponding journal (103) of the large shaft with eccentric portions, and/or wherein the supporting element is placed on rotating elements (33) associated to a support (3) of a machine for machining the large shaft with eccentric portions, in order to facilitate the sliding of the supporting element (30) in a lateral direction, following the displacement in a lateral direction of the journal (103) of the large shaft with eccentric portions during rotation of the large shaft with eccentric portions.

21. Method according to any of claims 14 to 20, wherein said large shaft with eccentric portions has a length of at least four meters.

22. Method according to any of claims 14 to 21, wherein said large shaft with eccentric portions has a weight of more than five tonnes.

## Patentansprüche

1. Maschine zum Bearbeiten von großen Wellen mit exzentrischen Teilen, wobei die großen Wellen Wellen mit einer Länge von mindestens vier Metern und/oder einem Gewicht von mehr als fünf Tonnen sind, wobei die Maschine einen ersten Träger (1) und einen zweiten Träger (2) umfasst, wobei der erste Träger (1) ausgebildet ist, um einen ersten Wellenabschnitt der großen Welle mit exzentrischen Teilen zu tragen, und wobei der zweite Träger (2) ausgebildet ist, um einen zweiten Wellenabschnitt der großen Welle mit exzentrischen Teilen zu tragen, wobei die Maschine zusätzlich mindestens einen dritten Träger (3) umfasst, der ausgebildet ist, um einen dritten Wellenabschnitt (103) der großen Welle mit exzentrischen Teilen zu tragen, wobei der dritte Träger (3) ein Tragelement (30, 300) umfasst, das so ausgebildet ist, dass der dritte Wellenabschnitt (103) auf dem Tragelement (30) liegen bleibt, wenn die große Welle mit exzentrischen Teilen in der Maschine platziert ist,
**dadurch gekennzeichnet, dass**
das Tragelement (30, 300) in einer lateral verschiebbaren Weise ausgebildet ist, so dass es sich mit dem dritten Wellenabschnitt (103) lateral, in Bezug zu einer Längsachse der großen Welle mit exzentrischen Teilen transversal, bewegt, wenn sich während der Drehung der großen Welle mit exzentrischen Teilen um ihre Längsachse der dritte Wellenabschnitt (103) lateral bewegt.

2. Maschine nach Anspruch 1, wobei das Tragelement (30, 300) ein Oberteil besitzt, das mindestens zwei Lager (31, 313) aufweist, die ausgebildet sind, um den dritten Wellenabschnitt (103) der großen Welle mit exzentrischen Teilen (100) von unten abzustützen.

3. Maschine nach Anspruch 2, wobei das Oberteil eine Mehrzahl von Gehäusen (32) aufweist, die ausgebildet sind, um die Lager aufzunehmen.

4. Maschine nach Anspruch 3, wobei die Gehäuse (32) angeordnet sind, so dass sie die Platzierung von Lagern (31) in unterschiedlichen Abständen voneinander gestatten, in einer solchen Weise, dass das Tragelement an verschiedene Durchmesser des dritten Wellenabschnitts angepasst werden kann.

5. Maschine nach einem der vorangehenden Ansprüche, wobei das Tragelement (30) auf Lagermitteln (33) angeordnet ist, die in dem dritten Träger (3) angeordnet sind.

6. Maschine nach Anspruch 2, **dadurch gekennzeichnet, dass** das Tragelement (300) umfasst
eine transversale Haupt-Linearführung (304), die auf einem oberen Bett (302) eines vertikalen Hydraulikfingers montiert ist;
einen transversal beweglichen Träger (307) mit mindestens einer unteren transversalen Haupt-Kufe (305), die auf der Haupt-Linearführung (304) verschiebbar ist;
mindesten zwei Lagerhalterkörper (310), die transversal zueinander entgegengesetzt und auf mindestens einer in dem beweglichen Träger (307) angeordneten oberen Sekundär-Linearführung (306) verschiebbar sind;
Lateralverschiebungsmittel (311), um die Lagerhalterkörper (310) auf der Sekundär-Linearführung (306) zwischen einer Mehrzahl von zueinander entgegengesetzten Positionen zu verschieben;
Verriegelungsmittel (309), um die Lagerhalterkörper (310) in Positionen verriegelt zu halten, in denen die Lager (313) den dritten Wellenabschnitt (103) der großen Welle mit exzentrischen Teilen (100) tragen.

7. Maschine nach Anspruch 6, **dadurch gekennzeichnet, dass** sie zwei Haupt-Kufen (305) umfasst, die in jeweiligen lateralen Teilen des beweglichen Trägers (307) angeordnet sind.

8. Maschine nach Anspruch 6 oder 7, **dadurch gekennzeichnet, dass** sie ein Paar zueinander parallele Sekundär-Linearführungen (306) umfasst.

9. Maschine nach Anspruch 6, 7 oder 8, **dadurch gekennzeichnet, dass** die Lagerhalterkörper (310) miteinander mittels einer transversalen Spindel (311) verbunden sind, die sich in jeweilige in den Lagerhalterkörpern (310) umfasste Gewindelöcher schraubt, in einer solchen Weise, dass die Drehung der Spindel (311) in einer und der anderen Richtung bewirkt, dass die Lagerhalterkörper (310) näher zusammen kommen oder sich weiter auseinander bewegen.

10. Maschine nach Anspruch 9, **dadurch gekennzeichnet, dass** sie mindestens ein Paar Anschlagschrauben (309) umfasst, die sich in koaxialer Ausrichtung mit der Spindel (311) in Durchgangsöffnungen der zueinander entgegengesetzten, nach oben zu aus dem beweglichen Träger (307) heraustretenden lateralen Flügel eindrehen lassen.

11. Maschine nach einem der vorangehenden Ansprüche, umfassend eine Mehrzahl der dritten Träger (3), mit den entsprechenden Tragelementen (30, 300).

12. Maschine nach einem der vorangehenden Ansprüche, umfassend einen Verschiebungsdetektor (4, 303), der zu dem Tragelement (30, 300) zugehörig ist.

13. Maschine nach einem der vorangehenden Ansprüche, wobei der erste Träger (1) und der zweite Träger (2) Träger für die End-Wellenabschnitte der großen Welle mit exzentrischen Teilen sind und wobei der dritte Träger (3) ein Träger für einen dazwischen liegenden Wellenabschnitt (103) der großen Welle mit exzentrischen Teilen ist.

14. Verfahren für die Bearbeitung von großen Wellen mit exzentrischen Teilen, umfassend die Schritte:
Platzieren der zu bearbeitenden großen Welle mit exzentrischen Teilen mit einem auf einem ersten Träger abgestützten ersten Wellenabschnitt und mit einem auf einem zweiten Träger (2) abgestützten zweiten Wellenabschnitt,
Drehen der großen Welle mit exzentrischen Teilen und Bearbeiten einer Mehrzahl von Wellenabschnitten der großen Welle mit exzentrischen Teilen;
**dadurch gekennzeichnet, dass** es zusätzlich den Schritt umfasst:
Aufliegen lassen von mindestens einem dritten Wellenabschnitt (103) der großen Welle mit exzentrischen Teilen auf einem Tragelement (30, 300), das in einer lateralen Richtung verschiebbar ist, so dass sich das Tragelement (30, 300) lateral, in Bezug zu einer Längsachse der großen Welle mit exzentrischen Teilen transversal, bewegt, wobei es während der Drehung der großen Welle mit exzentrischen Teilen (100) während des Bearbeitungsvorgangs einer Bewegung des entsprechenden dritten Wellenabschnitts (103) in der horizontalen Ebene folgt.

15. Verfahren nach Anspruch 14, welches zusätzlich den Schritt eines Messens der Verschiebung des Tragelements (30, 300) umfasst.

16. Verfahren nach Anspruch 14 oder 15, umfassend den Schritt eines Bearbeitens eines Wellenabschnitts (103), wenn er auf dem Tragelement (30, 300) aufliegt.

17. Verfahren nach einem der Ansprüche 14 bis 16, umfassend den Schritt eines Bearbeitens eines Wellenabschnitts, der nicht auf dem Tragelement (30, 300) aufliegt.

18. Verfahren nach einem der Ansprüche 14 bis 17, umfassend den Schritt eines Messens der Verschiebung des Tragelements (30, 300), um festzustellen, ob ein Wellenabschnitt in Bezug zu der Längsachse der großen Welle mit exzentrischen Teilen richtig zentriert ist.

19. Verfahren nach Anspruch 18, wobei die Verschiebung von einer Mehrzahl von Tragelementen (30, 300) gemessen wird, um festzustellen, ob eine entsprechende Mehrzahl von Wellenabschnitten (103) in Bezug zu der Längsachse der großen Welle mit exzentrischen Teilen richtig zentriert sind.

20. Verfahren nach einem der Ansprüche 14-19, wobei das Tragelement (30, 300) mindestens zwei Lager (31, 313) umfasst, um den entsprechenden Wellenabschnitt (103) der großen Welle mit exzentrischen Teilen zu tragen, und/oder wobei das Tragelement auf rotierenden Elementen (33) platziert ist, die einem Träger (3) einer Maschine zum Bearbeiten der großen Welle mit exzentrischen Teilen zugeordnet sind, um das Verschieben des Tragelements (30) in einer lateralen Richtung zu erleichtern, wobei es der Verschiebung des Wellenabschnitts (103) der großen Welle mit exzentrischen Teilen während der Drehung der großen Welle mit exzentrischen Teilen folgt.

21. Verfahren nach einem der Ansprüche 14 bis 20, wobei die große Welle mit exzentrischen Teilen eine Länge von mindestens vier Metern besitzt.

22. Verfahren nach einem der Ansprüche 14 bis 21, wobei die große Welle mit exzentrischen Teilen ein Gewicht von mehr als fünf Tonnen besitzt.

## Revendications

1. Machine pour usiner de grands arbres avec des parties excentriques, lesdits grands arbres étant des arbres ayant une longueur d'au moins quatre mètres et/ou un poids supérieur à cinq tonnes, ladite machine comprenant un premier support (1) et un deuxième support (2), ledit premier support (1) étant configuré pour supporter un premier tourillon du grand arbre avec des parties excentriques, et ledit deuxième support (2) étant configuré pour supporter un deuxième tourillon du grand arbre avec des parties excentriques, la machine comprenant de plus au moins un troisième support (3) configuré pour supporter un troisième tourillon (103) du grand arbre avec des parties excentriques, ledit troisième support (3) comprenant un élément de support (30, 300) configuré de sorte que ledit troisième tourillon (103) s'appuie sur ledit élément de support (30) lorsque le grand arbre avec des parties excentriques est placé dans la machine,
**caractérisée en ce que** :
ledit élément de support (30, 300) est configuré d'une manière latéralement déplaçable, de sorte qu'il se déplace latéralement, transversalement par rapport à un axe longitudinal du grand arbre avec des parties excentriques, avec le troisième tourillon (103) lorsque le troisième tourillon (103) se déplace latéralement pendant la rotation du grand arbre avec des parties excentriques autour de son axe longitudinal.

2. Machine selon la revendication 1, dans laquelle l'élément de support (30, 300) a une partie supérieure qui présente au moins deux paliers (31, 313) configurés pour supporter par-dessous le troisième tourillon (103) du grand arbre avec des parties excentriques (100).

3. Machine selon la revendication 2, dans laquelle ladite partie supérieure présente une pluralité de logements (32) configurés pour recevoir lesdites paliers.

4. Machine selon la revendication 3, dans laquelle lesdits logements (32) sont agencés afin de permettre la mise en place des paliers (31) à différentes distances les uns des autres, de sorte que l'élément de support peut être adapté à différents diamètres du troisième tourillon.

5. Machine selon l'une quelconque des revendications précédentes, dans laquelle l'élément de support (30) est agencé sur des moyens de palier (33) agencés dans le troisième support (3).

6. Machine selon la revendication 2, **caractérisée en ce que** l'élément de support (300) comprend :
un guide linéaire transversal principal (304) assemblé sur une base supérieure (302) d'un doigt hydraulique vertical ;
un support mobile transversal (307) avec au moins une roue transversale inférieure principale (305) déplaçable sur le guide linéaire principal (304) ;
au moins deux corps de maintien de palier (310) transversalement opposés entre eux et déplaçables sur au moins un guide linéaire secondaire supérieur (306) agencé dans le support mobile (307) ;
des moyens de déplacement latéral (311) pour déplacer les corps de maintien de palier (310) sur le guide linéaire secondaire (306) entre une pluralité de positions opposées entre elles ;
des moyens de verrouillage (309) pour maintenir les corps de maintien de palier (310) verrouillés en position, dans laquelle les paliers (313) supportent le troisième tourillon (103) du grand arbre avec des parties excentriques (100).

7. Machine selon la revendication 6, **caractérisée en ce qu'**elle comprend deux roues principales (305) agencées dans des parties latérales respectives du support mobile (307).

8. Machine selon la revendication 6 ou 7, **caractérisée en ce qu'**elle comprend une paire de guides linéaires secondaires (306) parallèles entre eux.

9. Machine selon la revendication 6, 7 ou 8, **caractérisée en ce que** les corps de maintien de palier (310) sont raccordés entre eux au moyen d'une broche transversale (311) qui se visse dans des trous filetés respectifs compris dans les corps de maintien de palier (310), de sorte que la rotation de la broche (311) dans une direction et dans l'autre amène les corps de maintien de palier (310) à se rapprocher ou s'éloigner l'un de l'autre.

10. Machine selon la revendication 9, **caractérisée en ce qu'**elle comprend au moins une paire des vis de butée (309) qui se vissent dans des trous débouchants des ailes latérales opposées entre elles qui sortent vers le haut à partir du support mobile (307) en alignement coaxial avec la broche (311).

11. Machine selon l'une quelconque des revendications précédentes, comprenant une pluralité desdits troisièmes supports (3), avec les éléments de support (30, 300) correspondants.

12. Machine selon l'une quelconque des revendications précédentes, comprenant un détecteur de déplacement (4, 303) associé à l'élément de support (30, 300).

13. Machine selon l'une quelconque des revendications précédentes, dans laquelle ledit premier support (1) et ledit deuxième support (2) sont des supports pour les tourillons d'extrémité du grand arbre avec des parties excentriques, et dans laquelle le troisième support (3) est un support pour un tourillon intermédiaire (103) du grand arbre avec des parties excentriques.

14. Méthode pour usiner de grands arbres avec des parties excentriques, comprenant les étapes consistant à :
placer le grand arbre avec des parties excentriques à usiner avec un premier tourillon supporté sur un premier support (1) et avec un deuxième tourillon supporté sur un deuxième support (2) ;
faire tourner le grand arbre avec des parties excentriques et usiner une pluralité de tourillons du grand arbre avec des parties excentriques ;
**caractérisée en ce qu'**elle comprend en outre l'étape consistant à :
laisser au moins un troisième tourillon (103) du grand arbre avec des parties excentriques s'appuyer sur un élément de support (30, 300) déplaçable dans une direction latérale, de sorte que ledit élément de support (30, 300) se déplace latéralement, transversalement par rapport à un axe longitudinal du grand arbre avec des parties excentriques, suivant un mouvement du troisième tourillon (103) correspondant sur le plan horizontal pendant la rotation du grand arbre avec des parties excentriques (100) pendant le processus d'usinage.

15. Méthode selon la revendication 14, qui comprend en outre l'étape consistant à mesurer le déplacement de l'élément de support (30, 300).

16. Méthode selon la revendication 14 ou 15, comprenant l'étape consistant à usiner un tourillon (103) lorsqu'il s'appuie sur ledit élément de support (30, 300).

17. Méthode selon l'une quelconque des revendications 14 à 16, comprenant l'étape consistant à usiner un tourillon qui ne s'appuie pas sur ledit élément de support (30, 300).

18. Méthode selon l'une quelconque des revendications 14 à 17, comprenant l'étape consistant à mesurer un déplacement dudit élément de support (30, 300) afin de déterminer si un tourillon est correctement centré par rapport à l'axe longitudinal du grand arbre avec des parties excentriques.

19. Méthode selon la revendication 18, dans laquelle le déplacement d'une pluralité d'éléments de support (30, 300) est mesuré afin de déterminer si une pluralité correspondante de tourillons (103) sont centrés par rapport à l'axe longitudinal du grand arbre avec des parties excentriques.

20. Méthode selon l'une quelconque des revendications 14 à 19, dans laquelle l'élément de support (30, 300) comprend au moins deux paliers (31, 313) pour supporter le tourillon (103) correspondant du grand arbre avec des parties excentriques, et/ou dans laquelle l'élément de support est placé sur des éléments rotatifs (33) associés à un support (3) d'une machine pour usiner le grand arbre avec des parties excentriques, afin de faciliter le coulissement de l'élément de support (30) dans une direction latérale, suivant le déplacement dans une direction latérale du tourillon (103) du grand arbre avec des parties excentriques pendant la rotation du grand arbre avec des parties excentriques.

21. Méthode selon l'une quelconque des revendications 14 à 20, dans laquelle ledit grand arbre avec des parties excentriques a une longueur d'au moins quatre mètres.

22. Méthode selon l'une quelconque des revendications 14 à 21, dans laquelle ledit grand arbre avec des parties excentriques a un poids supérieur à cinq tonnes.
